Europäisches Patentamt

European Patent Office

Office européen des brevets

(11) Veröffentlichungsnummer: **0 008 429**
**A1**

(12) # EUROPÄISCHE PATENTANMELDUNG

(21) Anmeldenummer: **79102924.2**

(22) Anmeldetag: **13.08.79**

(51) Int. Cl.³: **C 04 B 21/02**
**C 04 B 15/02, C 04 B 31/40**

(30) Priorität: **12.08.78 DE 2835426**

(43) Veröffentlichungstag der Anmeldung:
**05.03.80 Patentblatt 80/5**

(84) Benannte Vertragsstaaten:
**BE FR SE**

(71) Anmelder: **ECKART-WERKE**
**STANDARD-BRONZEPULVER-WERKE CARL ECKART**
**Kaiserstrasse 30**
**D-8510 Fürth/Bayern(DE)**

(72) Erfinder: **Besold, Robert, Dr.Diplom-Chemiker**
**Osternoher Strasse 20**
**D-8500 Nürnberg(DE)**

(74) Vertreter: **Louis, Dieter et al,**
**LOUIS, PÖHLAU & LOHRENTZ Patentanwälte**
**Kesslerplatz 1**
**D-8500 Nürnberg(DE)**

(54) **Aluminiumpulver und -pasten als Treibmittel und Verfahren zu ihrer Herstellung.**

(57) Die Erfindung betrifft Aluminiumpulver und -pasten zur Herstellung von Porenbeton-Mischungen. Um das Treibverhalten des Aluminiumpulvers bzw. der Aluminiumpaste günstig zu beeinflussen, schlägt die Erfindung vor, dem Pulver bzw. der Paste Chromsäure und/oder deren Salze in einer Menge von 0,1 bis 5 Gew.%, vorzugsweise 0,5 bis 3 Gew.%, bezogen auf den Aluminiumanteil, zuzusetzen.

EP 0 008 429 A1

- 1 -

BEZEICHNUNG GEÄNDERT
siehe Titelseite

Aluminiumpulver und -pasten

Die Herstellung von Porenbeton unter Verwendung von Aluminiumpulver oder -paste als Treibmittel ist seit langem bekannt (vgl. z.B. Ullmanns Enzyklopädie der technischen Chemie, 1953, 4. Bd., S. 225). Für die Mischung, aus welcher der Porenbeton hergestellt wird, kommen verschiedene Rezepturen zur Anwendung (vgl. z.B. Leichtkalkbeton und zementgebundener Porenbeton). Das Reaktions- bzw. Treibverhalten des zerkleinerten Aluminiums muss auf die jeweilige Zusammensetzung der Porenbetonmischung - nachfolgend auch Gasbetonmischung genannt - abgestimmt werden, z.B. danach, ob besonders schnell ablöschende Kalke und bzw. oder aggressive Bindemittel, wie Schlacke, Asche, eingesetzt werden.

- 2 -

In diesem Zusammenhang ist zu berücksichtigen, dass bei der Verarbeitung einer Gasbetonmischung nach der Zugabe des zerkleinerten Aluminiums der Treibprozess erst mit einer gewissen Verzögerung einsetzen soll, um ausreichend Zeit für das Vergiessen der Mischung zur Verfügung zu haben. Wenngleich sich dies mit den bekannten und nachfolgend noch im einzelnen beschriebenen Massnahmen erreichen lässt, so stellt sich dennoch das Problem, das Treibverhalten der Gasbetonmischung so beeinflussen zu können, dass nach dem Vergiessen der Mischung und dem dann einsetzenden Auftreiben der Masse die Reaktion kontrolliert, vor allem ruhig verläuft und bis zum Beginn des Abbindens der Masse beendet ist. Verläuft die Reaktion des Aluminiums und damit der Treibprozess zufolge der ursprünglichen Reaktivität zu schnell oder zu langsam, kann es zu Störungen kommen, die sich auf die Qualität des Gasbetons nachteilig auswirken. Bei zu schnellem Ablauf des Treibprozesses besteht die Gefahr, dass die Masse bei Beendigung der Gasbildung noch nicht fest genug ist und wieder in sich selbst zusammenfällt (sog. Kocher). Bei zu langsamer und dadurch zu lang andauernder Gasentwicklung können sich Rissbildungen in der Gasbetonmasse ergeben, weil in einem solchen Falle entweder die Endphase des Treibprozesses zu unruhig wird und damit wieder eine Tendenz zu sogenannten Kochern besteht oder weil auch noch nach Verfestigung der Masse Gas entweicht.

- 3 -

Für die Beeinflussung des Reaktionsverhaltens der für die Herstellung von Gasbeton verwendeten Aluminiumpulver und Aluminiumpasten und damit auch des Treibverhaltens der Gasbetonmischung hat man die Oberfläche der Aluminiumteilchen in bestimmter Weise behandelt. Hierbei ging man davon aus, dass die Reaktionsfähigkeit des Aluminiums durch eine Beeinflussung der Benetzbarkeit der Aluminiumoberfläche variiert werden kann. Je weniger das Aluminium benetzbar ist, desto geringer ist auch seine Reaktivität und damit auch die Geschwindigkeit des Reaktionsablaufes in der Gasbetonmischung zur Bildung der Treibgase. Nach bekannten Verfahren hat man zu diesem Zwecke, also zur Beeinflussung der Benetzbarkeit des Aluminiums, auf dieses entweder bereits während der Zerkleinerung des Aluminiums oder nachträglich überzugsbildende Substanzen aufgebracht. Das hiermit erreichte Ergebnis war jedoch unbefriedigend, weil bei der Verwendung eines solchen Aluminiums zur Gasbetonherstellung die Reaktion nicht unter Kontrolle gehalten werden kann, die Giessung unruhig ist und mit den oben erwähnten Kochern nach wie vor gerechnet werden muss.

Es ist weiterhin bekannt, die Benetzbarkeit der Aluminiumoberfläche durch eine thermische Behandlung des Aluminiums zu beeinflussen. Diese Methode besitzt den Nachteil, dass sie verhältnismässig kostspielig ist und auch nur eine geringe Variationsbreite bietet.

- 4 -

Ein demgegenüber grundsätzlich verschiedenes Verfahren zur Beeinflussung des Reaktionsverhaltens des Aluminiums während des Treibprozesses der Gasbetonmischung besteht darin, dass man in Abhängigkeit von den jeweiligen Erfordernissen und Zusammensetzungen der Mischung Aluminiumteilchen unterschiedlicher Korngrösse einsetzt. Je gröber das Aluminiumkorn ist, desto langsamer läuft die Treibreaktion ab. Eine Verringerung der Reaktionsgeschwindigkeit über die gesamte Dauer des Treibprozesses ist jedoch von Nachteil, weil in der Endphase die Reaktion unruhig abläuft und auch wieder eine Tendenz zu Kochern besteht.

Schliesslich ist es bekannt, den für die Herstellung von Gasbeton verwendeten Aluminiumpulvern und -pasten inhibierende Substanzen zuzusetzen. Durch den Zusatz von beispielsweise Borsäure während der Zerkleinerung bzw. Mahlung des Aluminiums in Gegenwart von Wasser (sog. Nassmahlung) wird eine vorzeitige Reaktion von Aluminium mit Wasser und damit eine Bildung von Wasserstoff verhindert, jedoch nicht die Reaktivität des entstehenden Aluminiumpulvers in eine bestimmte Richtung beeinflusst. Mit anderen Zusätzen zu Aluminiumpulver oder -pasten wie beispielsweise Ammoniumhydrogenphosphaten, die nach dem Mahlprozess in das Pulver bzw. die Paste eingearbeitet werden, soll die Haltbarkeit verarbeitungsfertiger Aluminium-Wasser-Suspensionen verbessert werden. Somit wird auch in derartigen Fällen die eigentliche Reaktivität des Aluminiums für dessen Verwendung als Treibmittel bei der Herstellung von Gasbeton nicht beeinflusst.

Der Erfindung liegt die Aufgabe zugrunde, eine Möglichkeit für die Beeinflussung des Treibverhaltens von Aluminiumpulvern und -pasten bei der Herstellung von Porenbeton zur Verfügung zu stellen, wodurch nach anfänglicher Inhibierung der Gasentwicklung, nämlich bis mindestens zum Vergiessen der Gasbetonmischung, die Reaktion und damit der Treibprozess in Abhängigkeit von der Zusammensetzung der Gasbetonmischung und den Eigenschaften der in dieser enthaltenen Bestandteile zeitlich so gesteuert werden kann, dass die Reaktion bis in die Endphase des Treibprozesses ruhig verläuft und dabei gewährleistet werden kann, dass beim Einsetzen der Verfestigung der Gasbetonmasse der Treibprozess beendet ist.

Diese Aufgabe wird erfindungsgemäss dadurch gelöst, dass in das Aluminiumpulver bzw. in die Aluminiumpaste Chromsäure und/oder deren Salze in einer Menge von 0,1 bis 5 %, vorzugsweise 0,5 bis 3 %, bezogen auf das Aluminium, eingearbeitet ist. Die Chromsäure bzw. die Chromate können bereits während des Mahlprozesses, dem das Aluminium zwecks Zerkleinerung unterworfen wird, in das Aluminiummaterial eingearbeitet werden. Dies bringt den Vorteil mit sich, dass das Chromat in dem Aluminium sehr homogen verteilt wird.

Mit einer Erhöhung des Chromsäure- bzw. Chromatanteiles in dem Aluminiumpulver bzw. der Aluminiumpaste kann der Beginn der gasbildenden Reaktion in der Gasbetonmischung den jeweiligen Erfordernissen entsprechend zeitlich hinausgeschoben werden. Wenn dann nach dem Ablauf der Inhibierungsphase die Reaktion einsetzt, läuft sie mit im
wesentlichen derselben Geschwindigkeit ab wie bei
der Verwendung von Aluminiumpulver mit einem geringeren Chromatgehalt. Bei Verwendung von erfindungsgemässen Mischungen mit unterschiedlichen
Chromoxidanteilen in dem Aluminium sind die Zeit/
Treibhöhe-Kurven im wesentlichen nur parallel zueinander verschoben, wobei jedoch in jedem Falle
die Beendigung des Treibprozesses vor dem Abbinden
der Masse gewährleistet werden kann. Der sich bei
der bekannten Verwendung gröberer Aluminiumpulver
zur Beeinflussung des Treibverhaltens der Gasbetonmischung ergebende und oben beschriebene Nachteil tritt demnach bei dem erfindungsgemässen Verfahren nicht auf. Der Einsatz des mit der Erfindung
vorgeschlagenen Aluminiumpulvers bzw. der Aluminiumpaste schafft die Voraussetzung dafür, dass in Zukunft auf dem Gebiet der Gasbetonherstellung anstehende Probleme besser oder erst überhaupt gelöst
werden können. So steht nunmehr die Möglichkeit,
für die Gasbetonmischung schnell-löschende, also
mit weniger Energieaufwand herstellbare und somit
auch billigere Kalke einzusetzen, zur Verfügung.

Weiterhin bietet die Erfindung die Möglichkeit, besonders leichte Gasbeton-Qualitäten herzustellen und damit Rohstoffe einzusparen. Für die Herstellung eines sehr leichten Gasbetons muss ein besonders feines Aluminiumpulver verwendet werden, damit eine ausreichende Porenstabilität erreicht wird. Dies brachte jedoch bisher die Schwierigkeit mit sich, dass die Anfangsreaktion sehr schnell einsetzte, was nicht nur zu einem Materialverlust sondern auch zu Rezepturschwierigkeiten führt. Diese Schwierigkeit lässt sich bei Anwendung der Erfindung ausräumen. Sie ermöglicht nämlich den Einsatz sehr feiner Aluminiumteilchen als Treibmittel, weil durch die Zugabe einer entsprechenden Menge an Chromat die anfängliche Inhibierungsphase zeitlich gestreckt werden kann, ohne jedoch die dann einsetzende Treibreaktion nachteilig zu beeinflussen.

Durch die Chromsäure- bzw. Chromatzugabe zu dem Aluminiumpulver bzw. der -paste wird das Benetzungsverhalten der Aluminiumteilchen nicht beeinträchtigt. Weiterhin besteht eine vorteilhafte Nebenwirkung darin, dass auch die Lagerfähigkeit der Aluminiumpulver und der hiermit hergestellten Pasten und Suspensionen deutlich verbessert wird.

Die bei Verwendung des erfindungsgemässen Aluminiumpulvers oder der -paste in die Gasbetonmasse gelangenden Mengen an Chromsäure oder Chromaten sind so gering, dass sie sich auf das Abbindeverhalten der Gasbetonmasse und damit auf die Festigkeit und den

- 8 -

Temperaturverlauf des Treibprozesses nicht nachteilig auswirken.


Beispiel 1
----------

Nach einem herkömmlichen Verfahren werden in einer
Kugelmühle mit einer Länge von 4 m und einem Durchmesser von 1 m ca. 100 kg Aluminiumgriess mit einer
Grösse von weniger als 400 Micron in Testbenzin bei
einer Kugelfüllung von ca. 3 500 kg gemahlen. Als
Schmiermittel für den Mahlprozess können dem Mahlgut sowohl nicht-ionische als auch ionenaktive
Tenside zugesetzt werden.

Auf die oben angegebene Weise wurden drei Chargen
hergestellt mit der Massgabe, dass jeder Charge eine bestimmte, jedoch gegenüber den anderen Chargen
unterschiedliche Menge an Kaliumdichromat, nämlich
1,2 bzw. 3 Gew.% bezogen auf Aluminium, zugesetzt
wurde.

Nach den Mahlvorgängen wurde die Mühle jeweils mit
Testbenzin in herkömmlicher Weise entleert, der angefallene sog. Pastenschlamm auf einer Filterpresse
abgepresst und im Vakuum zu Pulver getrocknet.

Die erhaltenen, jeweils eine unterschiedliche Menge
an Kaliumdichromat enthaltenden Aluminiumpulver-
Qualitäten wurden jede für sich zur Herstellung von
Gasbeton eingesetzt, wobei die Zusammensetzung der
vor der Zugabe der Aluminiumpulver vorbereiteten Gasbetonmischung dem Stand der Technik entsprach und in allen drei Fällen übereinstimmte, um für die Feststellung der Wirkung der Chromatzugabe miteinander vergleichbare Ergebnisse zu erhalten.

Es zeigte sich, dass der Beginn der Reaktion und damit auch des Treibprozesses umso später einsetzte, je höher der Chromatanteil in dem zugegebenen Aluminiumpuler war, dass jedoch nach dem Einsetzen der Reaktion in allen drei Fällen der Treibprozess ruhig und im wesentlichen mit derselben Geschwindigkeit (Steighöhe pro Zeiteinheit) ablief und vor Einsetzen des Abbindungsprozesses beendet war.

Beispiel 2
----------

Nach dem Verfahren des DBP No. 25 57 689 wurde eine Aluminiumpaste auf Wasserbasis aus einem Filterpresskuchen hergestellt, der durch Vermahlung von Aluminiumgriess in Testbenzin mit Stearinsäure erhalten wurde. Nach dem Entzug der restlichen Mahlflüssigkeit wird beim Ergänzen mit wässriger Tensidlösung der flüssigen Phase Kaliumdichromat zugesetzt, und zwar wieder in abgestuften Mengen von 1, 2 und 3 Gew.% bezogen auf Aluminium, um bei der Weiterverarbeitung der 3 Pastenproben entsprechend dem in Beispiel 1 beschriebenen Verfahren Vergleichsversuche durchzuführen. Die bei diesen Versuchen gemachten Beobachtungen entsprachen dem in Beispiel 1 beschriebenen Ergebnis.

Beispiel 3
----------

Nach dem in Beispiel 1 beschriebenen Verfahren wurde ein Aluminiumpulver hergestellt, allerdings mit der Massgabe, dass in diesem Falle das Chromat nach dem Mahlvorgang zugesetzt wurde zusammen mit einem inerten, wassermischbaren Lösungsmittel, z.B. Äthylenglykol, Polyglykole, um das Pulver zwecks gefahrloser Handhabung beim Gasbeton-Hersteller staubfrei zu machen. Bei der Zugabe des Chromats nach dem Mahlprozess muss jedoch auf eine ausreichende Homogenisierung geachtet werden.

Auch bei der Untersuchung der in entsprechender Weise wie bei den vorstehenden Beispielen mit unterschiedlichen Mengen an Kaliumdichromat versetzten Proben wurde wiederum festgestellt, dass die Reaktion in der Gasbetonmischung mit einer umso grösseren Verzögerung einsetzte, je höher die Chromatkonzentration war und dass nach Beginn des Treibprozesses die Reaktion in allen 3 Fällen gleichmässig und im wesentlichen mit derselben Geschwindigkeit ablief.

— 1 —

Patentansprüche:

1. Aluminiumpulver und -pasten zur Herstellung von Porenbeton-Mischungen, gekennzeichnet durch einen Gehalt an Chromsäure und/oder deren Salze in einer Menge von 0,1 bis 5 Gew.%, vorzugsweise 0,5 bis 3 Gew.%, bezogen auf den Aluminiumanteil.

2. Verfahren zur Herstellung eines Aluminiumpulvers nach Anspruch 1, dadurch gekennzeichnet, dass die Chromsäure bzw. die Chromate bereits während des Mahlprozesses des Aluminiums in dieses eingearbeitet werden.

3. Verfahren zur Herstellung eines Aluminiumproduktes nach Anspruch 1, in welchem neben dem Aluminium noch eine flüssige Phase vorliegt, dadurch gekennzeichnet, dass die Chromsäure bzw. die Chromate über die flüssige Phase verteilt werden.

**Europäisches Patentamt**

## EUROPÄISCHER RECHERCHENBERICHT

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | DE – A – 2 239 500 (WÜSTEFELD) <br> * Anspruch 1 * <br> -- | 1,3 | C 04 B 21/02 <br> C 04 B 15/02 <br> C 04 B 31/40 |
| | DE – A1 – 2 639 227 (SHIKOKU KAKEN KOGYO) <br> * Ansprüche 5 und 11 * <br> -- | 1 | |
| A | DE – A – 2 221 454 (WÜSTEFELD) <br> -- | | **RECHERCHIERTE SACHGEBIETE (Int. Cl.)** |
| A | DE – B – 1 471 171 (MICRO MINERAL HOLDING) <br> ---- | | C 04 B 15/00 <br> C 04 B 21/00 <br> C 04 B 31/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 16-10-1979 | HÖRNER |

EPA form 1503.1 06.78